(19) Europäisches Patentamt
European Patent Office
Office européen des brevets

(11) EP 1 069 826 B1

(12) EUROPÄISCHE PATENTSCHRIFT

(45) Veröffentlichungstag und Bekanntmachung des Hinweises auf die Patenterteilung:
**19.02.2003 Patentblatt 2003/08**

(21) Anmeldenummer: **99917925.2**

(22) Anmeldetag: **30.03.1999**

(51) Int Cl.[7]: **A01N 57/20**

(86) Internationale Anmeldenummer:
**PCT/EP99/02187**

(87) Internationale Veröffentlichungsnummer:
**WO 99/052367 (21.10.1999 Gazette 1999/42)**

(54) **SYNERGISTISCHE HERBIZIDE MITTEL AUF BASIS VON PHOSPHORHALTIGEN BLATTHERBIZIDEN, IMIDAZOLINONEN UND WUCHSSTOFFHERBIZIDEN**

SYNERGISTIC HERBICIDAL AGENTS BASED ON LEAF HERBICIDES CONTAINING PHOSPHORUS, IMIDAZOLINONES AND HORMONE WEED-KILLERS

AGENTS HERBICIDES SYNERGIQUES A BASE D'HERBICIDES AGISSANT SUR LES FEUILLES, D'IMIDAZOLINONES ET D'HERBICIDES ET DE SUBSTANCES DE CROISSANCE COMBINES

(84) Benannte Vertragsstaaten:
**DE ES FR GB GR IT PT**

(30) Priorität: **08.04.1998 DE 19815820**

(43) Veröffentlichungstag der Anmeldung:
**24.01.2001 Patentblatt 2001/04**

(73) Patentinhaber: **Bayer CropScience GmbH**
**65929 Frankfurt/Main (DE)**

(72) Erfinder:
- **KUAH, Tai Choon**
  **Taman Bukit Desa, 58100 Kuala Lumpur (MY)**
- **OOI, Soon Huat**
  **52200 Kuala Lumpur (MY)**
- **JAGDISH SINGH, Gill**
  **56200 Kuala Lumpur (MY)**
- **ANTHONYSAMY, Daniel**
  **52100 Kuala Lumpur (MY)**

(56) Entgegenhaltungen:
**EP-A- 0 252 237**
**EP-A- 0 502 014**
**EP-A- 0 569 944**
**DE-A- 2 856 260**
**DE-A- 4 019 362**

- **DATABASE CAPLUS [Online] LANIE ET AL.: "Herbicide combinations for soybean (Glycine max) planted in stale seedbed" Database accession no. 121:172977 XP002111732 & WEED TECHNOL., Bd. 8, Nr. 1, 1994, Seiten 17-22,**
- **DATABASE CAPLUS [Online] WILLARD ET AL.: "Influence of herbicide combination and application technology on cogongrass (Imperata cylindrica) control" Database accession no. 126:326810 XP002111733 & WEED. TECHNOL., Bd. 11, Nr. 1, 1997, Seiten 76-80,**
- **DATABASE CAPLUS [Online] BRUFF ET AL.: "Tank-mix combinations for weed control in stale seedbed soybean (Glycine max)" Database accession no. 117:106230 XP002111734 & WEED TECHNOL., Bd. 6, Nr. 1, 1992, Seiten 45-51,**
- **CHEMICAL ABSTRACTS, vol. 110, no. 17, 1989 Columbus, Ohio, US; abstract no. 149765, FLINT ET AL.: "Effects of glyphosate combinations with 2,4-D or Dicamba on field bindweed (Convolvulus arvensis)" XP002111765 & WEED SCI:, Bd. 37, Nr. 1, 1989, Seiten 12-18,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 069 826 B1

Printed by Jouve, 75001 PARIS (FR)

**Beschreibung**

Die Erfindung liegt auf dem Gebiet der Pflanzenschutzmittel, die gegen unerwünschten Pflanzenwuchs eingesetzt werden können und als Herbizidwirkstoffe eine Kombination von mehr als zwei Herbiziden enthalten.

Spezieller betrifft sie herbizide Mittel, welche als Wirkstoff ein Breitspektrumherbizid des Typs der blattwirksamen Herbizide wie Glufosinate, Bialaphos, Glyphosate und Sulfosate in Kombination mit zwei weiteren Herbiziden aus bestimmten anderen Stoffgruppen enthalten

Die genannten blattwirksamen Herbizide werden über die grünen Teile der Pflanzen aufgenommen und sind als Breitspektrum-Herbizide oder Totatherbizide bekannt; siehe "The Pesticide Manual" 11th Edition, British Crop Protection Council 1997, S. 120, 382 bzw. 646. Sie werden vorwiegend im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. eingesetzt. Ein weiteres Einsatzgebiet mit zunehmender Bedeutung besteht in transgenen Pflanzenkulturen, die gegen die Herbizide resistent sind.

Die Wirksamkeit von Herbiziden hängt unter anderem von der Art des eingesetzten Herbizids, dessen Aufwandmenge, der Zubereitung, den jeweils zu bekämpfenden Schadpflanzen, den Klima- und Bodenverhältnissen, etc. ab. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen gegenüber einem Wirkstoff, die bei längerer Anwendung oder geographisch begrenzt auftreten können, Wirkungsverluste bis hin zur Resistenz von Schadpflanzen lassen sich nur bedingt durch höhere Aufwandmengen der Herbizide ausgleichen.

Wegen der Vielzahl möglicher Einflußfaktoren gibt es praktisch keinen einzelnen Wirkstoff, der die gewünschten Eigenschaften für unterschiedliche Anforderungen, insbesondere hinsichtlich der Schadpflanzenspezies und der Klimazonen, in sich vereinigt. Dazu kommt die ständige Aufgabe, die Wirkung mit immer geringerer Aufwandmenge an Herbiziden zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine häufig angewandte Methode zur Verbesserung des Anwendungsprofils eines Herbizids besteht in der Kombination des Wirkstoffs mit einem oder mehreren anderen Wirkstoffen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten blattwirksamen Herbizide mit einer Kombination von Herbiziden aus der Gruppe der Imidazolinone und der Wuchsstoffherbizide in besonders günstiger Weise zusammenwirken.

Gegenstand der Erfindung sind somit herbizide Mittel, gekennzeichnet durch einen wirksamen Gehalt an einer Kombination aus

A) einem oder mehreren blattwirksamen Herbiziden aus der Gruppe der Verbindungen der Formeln (A1) und (A2) und deren Ester und Salze,

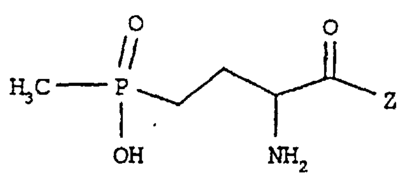

(A1)

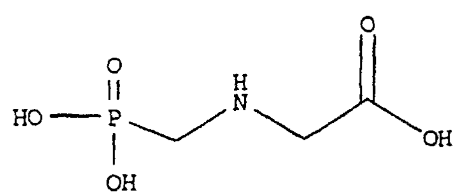

(A2)

worin Z einen Rest der Formel -OH oder einen Peptidrest der Formel

$$-NHCH(CH_3)CONHCH(CH_3)COOH$$

oder

$$-NHCH(CH_3)CONHCH[CH_2CH(CH_3)_2]COOH$$

bedeutet,

B) einem oder mehreren Wirkstoffen aus der Gruppe der Imidazolinon-Herbizide, vorzugsweise Imazapyr, Imazethapyr, Imazamethabenz, insbesondere Imazapyr, und deren Salze,

C) einem oder mehreren Wirkstoffen aus der Gruppe der Wuchsstoffherbizide, vorzugsweise 2,4-D und MCPA

Aus EP-A-0252237 (CA-A-1291344) ist bereits bekannt, Glufosinate und dessen Salze mit Imidazolinon-Herbiziden zu kombinieren, wobei synergistische Wirkungssteigerungen beobachtet worden sind. Aus EP-A-0502014 (US-A-5525578) ist bekannt, daß die Wirkung von Kombinationen von Glufosinate und Imidazolinonen durch Zusatz bestimmter Tenside, z. B. aus der Reihe der Fettalkohol-polyglykolether-sulfate, gesteigert werden kann.
Aus DE-A-2856260 (GB-A-2011416) sind synergistische Kombinationen von Glufosinate mit Wuchsstoffherbiziden wie 2,4-D, MCPA, 2,3,6-TBA, CMPP, Dichlorprop, 2,4-DB, MCPB und Dicamba bekannt.
Aus DE-A-4019362 ist bekannt, Glyphosate oder dessen Derivate mit bestimmten Tensiden als Aktivatoren zu kombinieren, wobei die Kombination weitere bekannte Wirkstoffe enthalten kann. Als mögliche Kombinationswirkstoffe werden unter anderem 2,4-D, 2,4-DB, MCPP oder auch Imidazolinone wie Imazaquin und Imazapur erwähnt.
Aus EP-A-0569944 ist bekannt, herbizide Imidazolinone aus der Gruppe Imazaquin, Imazethapyr oder Imazethamethapyr mit Herbiziden aus der Gruppe Dicamba, 2,4-D, Bromoxynil, Pyridate, Cyclohexandionen und Sulfonylharnstoffen zu kombinieren, wobei auch synergistische Wirkungssteigerungen beobachtet wurden.
Weiterhin sind Berichte von Feldversuchen zu folgenden Kombinationen bekannt: Glyphosate und 2,4-D oder Dicamba (siehe Weed Science, Bd. 37, Nr. 1, 1989, S. 12-18), Glyphosate und Imazaquin (siehe Weed Technology, Bd. 6, Nr. 1, 1992, S. 45-51), Glufosinate oder Glyphosate und Imazaquin (siehe Weed Technology, Bd. 8, Nr. 1, 1994, S. 17-22) und Glyphosate und Imazapyr (siehe Weed Technology, Bd. 11, Nr. 1, 1997, S. 76-80).
Eine Mischung von Imazamethabenz und Mecoprop war im Handel erhältlich bzw. empfohlen worden (siehe "The Pesticide Manual" 10. Auflage 1994, S. 583, Abschnitt "Appllcations").
Überraschenderweise werden durch die erfindungsgemäßen Kombinationen aus Herbiziden A+B+C synergistische Wirkungssteigerungen möglich, die weit und in unerwarteter Weise über die Wirkungssteigerungen hinausgehen, die mit den Zweierkombinationen A+B und A+C erreicht werden.
Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure,
(A1.2) Glufosinate-monoammoniumsalz,
(A1.3) L-Glufosinate, L- oder (2S)-2-Amino-4-[hydroxy(methyl)phosphinyl]-butansäure,
(A1.4) L-Glufosinate-monoammoniumsalz,
(A1.5) Bialaphos (oder Bilanafos), d.h. L-2-Amino-4-[hydroxy(methyl)phosphinyl]-butanoyl-L-alanyl-L-alanin, insbesondere dessen Natriumsalz.

Glufosinate wird üblicherweise in Form eines Salzes, vorzugsweise des Ammoniumsalzes eingesetzt. Das Racemat von Glufosinate bzw. Glufosinate-ammonium wird alleine überlicherweise in Dosierungen ausgebracht, die zwischen 200 und 1000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium; siehe "The Pesticide Manual" 11. Auflage British Crop Protection Council 1997. S. 382 bzw. S. 120. In den erfindungsgemäßen Kombinationen benötigt man in der Regel wesentlich weniger Wirkstoff (A1), beispielsweise eine Aufwandmenge im Bereich von 20 bis 500, vorzugsweise 20 bis 100 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.
Beispiele für Verbindungen (A2) sind

(A2.1) Glyphosate, d. h. N-(Phosphonomethyl)-glycin,
(A2.2) Glyphosate-monoisopropylammoniumsalz,

(A2.3) Glyphosate-natriumsalz,
(A2.4) Glyphosate-monoammoniumsalz
(A2.5) Sulfosate, d. h. N-(Phosphonomethyl)-glycin-trimesiumsalz = N-(Phosphonomethyl)-glycin-trimethylsulfoniumsalz,
(A2.6) Glyphosate-monoethylester.

Glyphosate wird üblicherweise in Form eines Salzes, vorzugsweise des Monoisopropylammoniumsalzes oder des Trimethylsulfoxonium- (Trimesium-)-salzes (Sulfosate) eingesetzt. Bezogen auf die freie Säure Glyphosate liegt die Einzeldosierung im Bereich von 1 bis 5 kg AS/ha. Glyphosate ist unter vielen Aspekten und Anwendungsgebieten dem Glufosinate ähnlich.
In den erfindungsgemäßen Kombinationen benötigt man in der Regel Aufwandmengen im Bereich von 20 bis 500, vorzugsweise 20 bis 100 g AS/ha Glyphosate.
Beispiele für Verbindungen (B) sind

(B1) Imazapyr und dessen Salze und Ester,
(B2) Imazethapyr und dessen Salze und Ester,
(B3) Imazamethabenz und dessen Salze und Ester,
(B4) Imazamethabenz-methyl,
(B5) Imazamox und dessen Salze und Ester,
(B6) Imazaquin und dessen Salze und Ester, z. B. das Ammoniumsalz,
(B7) AC 263,222 (Imazapic) und dessen Salze und Ester.

Die Aufwandmengen der Einzelherbizide sind in der Regel im Bereich von 0,25 bis 2 kg AS/ha. In den erfindungsgemäßen Kombinationen benötigt man in der Regel Aufwandmengen im Bereich von 20 bis 500, vorzugsweise 20 bis 100 g AS/ha der Imidazolinone, vorzugsweise von Imazapyr.
Beispiele für Verbindungen (C) sind Wuchsstoffherbizide wie

(C1) 2,4-D [= 2,4-Dichlorphenoxy)-essigsäure] und deren Salze und Ester,
(C2) MCPA [= 4-Chlor-2-methylphenoxy)-essigsäure] und deren Salze und Ester,
(C3) 2,3,6-TBA [= 2,3,6-Trichlorbenzoesäure] und deren Salze und Ester,
(C4) CMPP (Mecoprop) (C4.1) [= (RS)-2-(4-Chlor-2-methylphenoxy)-propionsäure], Mecoprop-P (C4.2) [= +-(R)-2-(4-Chlor-2-methylphenoxy)-propionsäure] und deren Salze und Ester.
(C5) Dichlorprop (C5.1) [= (RS)-2-(2,4-Dichlorphenoxy)-propionsäure], Dichlorprop-P (C5.2) [= (+)-(R)-2-(2,4-Dichlorphenoxy)-propionsäure] und deren Salze und Ester,
(C6) 2,4-DB [= 4-(2,4-Dichlorphenoxy)-butansäure] und deren Salze und Ester,
(C7) MCPB [= 4-(4-Chlor-2-methylphenoxy)-butansäure] und deren Salze und Ester,
(C8) Dicamba [= 3,6-Dichlor-2-methoxy-benzoesäure] und deren Salze und Ester.

Die genannten Wirkstoffe sind ebenfalls alle bekannt; siehe "The Pesticide Manual" 11. Auflage British Crop Protection Council 1997. In den erfindungsgemäßen Kombinationen benötigt man in der Regel Aufwandmengen im Bereich von 10 bis 1000, vorzugsweise 10 bis 80 g AS/ha der Wuchsstoffherbizide, vorzugsweise von 2,4-D und MCPA, inbesondere von 2,4-D.
Die Mengenverhältnisse der Komponenten A:B:C bezogen auf das Gewicht können in weiten Bereichen variiert werden. Vorzugsweise ist das Mengenverhältnis im Bereich von 1:0,5:0,1 bis 1:2:2, insbesondere im Bereich von 1:0,6:0,2 bis 1:1:1; die genannten Mengenverhältnisse gelten vorzugsweise für die Kombinationen mit Herbiziden der Formel (A1). Optimale Mengenverhältnisse können vom jeweiligen Applikationsgebiet, Unkrautspektrum und der eingesetzten Wirkstoffkombination abhängen und in Vorversuchen bestimmt werden.
Die erfindungsgemäßen Mittel lassen sich zur selektiven Bekämpfung von annuellen und perennierenden Schadpflanzen in Plantagenkulturen wie Ölpalme, Kokospalme, Gummibaum, Zitrus, Ananas, Baumwolle, Kaffee, Kakao u.a. sowie im Obst- und Weinbau einsetzen. Ebenso können die erfindungsgemäßen Kombinationen im Ackerbau im sogenannten "no till" bzw. "zero till"-Verfahren eingesetzt werden. Ein weiteres Anwendungsgebiet ist die Bekämpfung von Schadpflanzen in transgenen Kulturen oder auf klassischem Wege selektierten Kulturen, die gegen die Wirkstoffe (A)+(B)+(C) resistent sind. Die erfindungsgemäßen Mittel können aber auch nicht-selektiv auf Wegen, Plätzen, Industrieanlagen etc. angewendet werden, um diese Flächen von unerwünschtem Pflanzenwuchs frei zu halten.
Die erfindungsgemäßen Mittel erfassen ein breites Unkautspektrum. Sie eignen sich beispielsweise zur Bekämpfung von annuellen und perennierenden Unkräutern wie beispielsweise aus den Spezies Agropyron, Paspalum, Cynodon, Imperata, Pennisetum, Convolvulus, Cirsium, Rumex, Hedyotis, Asystasia, Borraria, Clidemia, Ageratum, Ottochloa, Axonopus, Brachiara, Digitaria, Panicum, Echinochloa u. a. Bevorzugt lassen sie sich gegen tropische

Unkräuter in Plantagenkulturen einsetzen, beispielsweise gegen Hedyotis verticillata, Asystasia intrusa, Borraria tatifolia, Clidemia hirta, Ageratum conyzoides, Ottochloa nodosa, Axonopus compressus, Brachiara mutica, Digitaria horizontalis, Panicum maximum, Echinochloa colona.

Die erfindungsgemäßen herbiziden Mittel zeichnen sich durch eine schnell einsetzende und lang andauernde herbizide Wirkung aus. Die Regenfestigkeit der Wirkstoffe in den erfindungsgemäßen Kombinationen ist günstig. Als besonderer Vorteil fällt ins Gewicht, daß die in den Kombinationen verwendeten und wirksamen Dosierungen von Verbindungen (A), (B) und (C) so gering sind, daß ihre Bodenwirkung erheblich reduziert ist. Somit wird deren Einsatz nicht nur in empfindlichen Kulturen erst möglich, sondern Grundwasser-Kontaminationen werden praktisch vermieden. Durch die erfindungsgemäßen Kombinationen von Wirkstoffen wird eine erhebliche Reduzierung der nötigen Aufwandmengen der Wirkstoffe ermöglicht.

Gegenstand der Erfindung ist deshalb auch ein Verfahren zur Bekämpfung von unerwünschtem Pflanzenwuchs, dadurch gekennzeichnet, daß man ein oder mehrere Herbizide des Typs (A) mit einem oder mehreren Herbiziden des Typs (B) und einem oder mehreren Herbiziden des Typs (C) auf die Schadpflanzen, Pflanzenteile davon oder die Anbaufläche appliziert.

Bei der gemeinsamer Anwendung von Herbiziden des Typs (A)+(B)+(C) treten überadditive (= synergistische) Effekte auf. Dabei ist die Wirkung in den Kombinationen stärker als die zu erwartende Summe der Wirkungen der eingesetzten Einzelherbizide oder der Summe der Wirkungen von Zweierkombinationen, wie beispielsweise 1/2(A)+(B) und 1/2(A)+(C), oder einer Zweierkombination (A)+(B), (A)+(C) oder (B)+(C) und der Wirkung des jeweiligen einzelnen Herbizids (A), (C), (B) bzw. (C). Die synergistischen Effekte erlauben eine Reduzierung der Aufwandmenge, die Bekämpfung eines breiteren Spektrums von Unkräutern und Ungräsern, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Diese Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Die erfindungsgemäßen Wirkstoffkombinationen können sowohl als Mischformulierungen der drei Komponenten, gegebenenfalls mit weiteren üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A), (B) und (C) oder deren Kombinationen können auf verschiedene Art formuliert werden, je nachdem welche biologischen und/oder chemisch-physikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Öl-in-Wasser- und Wasser-in-Öl-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen. "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder Insektiziden, sowie Safenern, Düngemitteln und/oder Wachstumsregulatoren herstellen, z.B. in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalinsulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren

können beispielsweise verwendet werden:

Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.

Staubförmige Formulierungen enthalten meistens 5 bis 20 Gew.-% an Wirkstoff, versprühbare Lösungen etwa 0,2 bis 25 Gew.-% Wirkstoff.

Bei Granulaten wie dispergierbaren Granulaten hängt der Wirkstoffgehalt zum Teil davon ab, ob die wirksame Verbindung flüssig oder fest vorliegt und welche Granulierhilsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz- und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium ebenso wie die seines L-Enantiomeren durch oberflächenaktive Substanzen verbessert werden kann, vorzugsweise durch Netzmittel aus der Reihe der Alkylpolyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet ist; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden.

Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) und (C) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.

-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

Beispiel 1 (Feldversuch)

In einer Ölpalmen-Plantage wurde das wirtschaftlich wichtige tropische Unkraut Hedyotis verticillata auf Parzellen der Größe 2 x 5m unter natürlichen Freilandbedingungen herangezogen und mit den Herbiziden A1.2, B1 und C1 bzw. deren Mischungen im Tankmix unter Standardbedingungen mit einem Parzellen-Spritzgerät bei einer Wasseraufwandmenge von 450 Liter Wasser je Hektar behandelt (Überkopfapplikation auf die Unkräuter; Pflanzenbewuchs anfangs mit mehr als 95% Bodenbedeckung). Im Abstand von 1, 2, 3, 4, 5, 6, 7 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Plfanzen abgestorben; 50 % Wirkung = 50% der Pflanzen und grünen Pflanzenteile abgestorben; 0 % Wirkung = keine erkennbare Wirkung = wie Kontrollparzelle. Die Boniturwerte von jeweils 4 Parzellen wurden gemittelt. Die Ergebnisse sind in Tabelle 1 zusammengefaßt.

Der Vergleich zeigt, daß die Dreiermischungen (Versuche 1 und 2) meist mehr, teilweise erheblich mehr herbizide Wirkung aufweisen als die Summe der Wirkungen der Einzelherbizide oder Summe der Wirkungen von entsprechenden Zweiermischungen bzw. von Zweiermischungen und Einzelherbiziden; vgl. z. B. Versuch Nr. 1 mit den Versuchen Nr. 6+15, Nr. 7+14 oder Nr. 5+10 bzw. Versuch Nr. 2 mit den Versuchen Nr. 8+14, Nr. 3+9 oder Nr. 4+16, jeweils in der gleichen Woche nach Applikation.

Wenn die beobachteten Wirkungswerte bereits die formale Summe der Werte zu den Versuchen mit Zweier- bzw. Einzelapplikationen übertreffen, dann übertreffen sie den Erwartungswert nach Colby ebenfalls, der sich nach folgender Formel errechnet (vgl. S. R. Colby; in Weeds 15 (1967) S. 20 bis 22):

$$E = A+B+C-(A\cdot B\cdot C/1000) \text{ oder } E = AB+C-(AB\cdot C/100) \text{ oder } E=AB+AC-(AB\cdot AC/100)$$

Dabei bedeuten: A, B, C, AB, AC = Wirkung der Wirkstoffe A, B, C, A+B bzw. A+C in % bei a, b, c, a+b bzw. a+c g AS/ha; E = Erwartungswert in % bei a+b+c g AS/ha.

Nach allen Betrachtungsweisen liegen die beobachteten Werte der Versuche 1 und 2 über den Erwartungswerten nach Colby.

Tabelle 1:

| Herbizide Wirkung gegen Hedyotis verticillata in Ölpalmplantagen | | | | | | | | | | |
|---|---|---|---|---|---|---|---|---|---|---|
| Nr. | Wirkstoff(e) | Dosis (g AS/ha) | Herbizide Wirkung (%), Wo. n. Appl. | | | | | | | |
| | | | 1 | 2 | 3 | 4 | 5 | 6 | 7 | 8 |
| 1 | A1.2 + B1 + C1 | 50+50+40 | 68 | 73 | 90 | 100 | 100 | 100 | 99 | 95 |
| 2 | A1.2 + B1 + C1 | 80+50+20 | 75 | 80 | 100 | 100 | 100 | 100 | 100 | 100 |
| 3 | A1.2 + B1 | 40+50 | 45 | 38 | 40 | 25 | 18 | 10 | 10 | 0 |
| 4 | A1.2 + B1 | 80+50 | 60 | 50 | 48 | 40 | 40 | 38 | 33 | 8 |
| 5 | A1.2 + B1 | 25+50 | 40 | 38 | 33 | 35 | 13 | 10 | 10 | 0 |
| 6 | A1.2 + C1 | 50+50 | 45 | 38 | 35 | 20 | 15 | 10 | 10 | 0 |
| 7 | A1.2 + C1 | 50+40 | 50 | 40 | 33 | 20 | 10 | 10 | 10 | 0 |
| 8 | A1.2 + C1 | 80+20 | 60 | 58 | 50 | 45 | 40 | 30 | 23 | 10 |
| 9 | A1.2 + C1 | 40+20 | 50 | 38 | 30 | 20 | 10 | 10 | 10 | 0 |
| 10 | A1.2 + C1 | 25+40 | 40 | 34 | 30 | 20 | 10 | 12 | 10 | 7 |
| 11 | A1.2 | 25 | 35 | 28 | 23 | 20 | 10 | 10 | 10 | 0 |
| 12 | A1.2 | 50 | 35 | 25 | 20 | 20 | 10 | 10 | 10 | 0 |
| 13 | A1.2 | 80 | 58 | 45 | 40 | 40 | 40 | 30 | 28 | 8 |
| 14 | B1 | 50 | 8 | 5 | 5 | 5 | 10 | 13 | 15 | 15 |
| 15 | C1 | 40 | 6 | 5 | 5 | 4 | 0 | 0 | 0 | 0 |
| 16 | C1 | 20 | 6 | 5 | 5 | 1 | 0 | 0 | 0 | 0 |

Abkürzungen in Tabelle 1 (siehe nachstehend):
Wo. n. Appl. = Woche(n) nach Applikation
A1.2 = Glufosinate-ammonium (g AS/ha bezieht sich auf die Menge an Salz)
B1 = Imazapyr (g AS/ha bezieht sich auf die Menge an Säureäquivalent)
C1 = 2,4-D-Natriumsalz (g AS/ha bezieht sich auf die Menge an Salz)

Beispiel 2 (Feldversuch)

In einer Gummibaum-Plantage wurden Parzellen mit dem tropischen Unkraut Asystasia intrusa unter natürlichen Freilandbedingungen herangezogen (Größe der Parzellen 2 x 5m). Die Herbizide bzw. deren Mischungen im Tankmix wurden unter Standardbedingungen ausgebracht (Überkopfapplikation mit Parzellen-Spritzgerät, Wasseraufwandmenge 450 l/ha). Im Abstand von 4, 7, 13, 17 und 21 Wochen nach Applikation wurde die herbizide Wirksamkeit der Wirkstoffe bzw. deren Mischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte wie in Beispiel 1 beschrieben. Die Ergebnisse sind in Tabelle 2 zusammengefaßt.
Der Vergleich der Boniturwerte zeigt, daß die Dreiermischung (Versuch 1) erheblich bessere Langzeitwirkung hat als

die Summe der herbiziden Wirkungen der Einzelherbizide (siehe die Versuche nach 13 bis 21 Wochen nach Applikation).

Tabelle 2:

| Herbizide Wirkung gegen Asystasia intrusa in Gummibaum-Plantage | | | | | | | |
|---|---|---|---|---|---|---|---|
| Nr. | Wirkstoff(e) | Dosis (g AS/ha) | Wirkung (%), Wo. n. Appl. | | | | |
| | | | 4 | 7 | 13 | 17 | 21 |
| 1 | A1.2 + B1 + C1 | 60+50+40 | 90 | 90 | 80 | 80 | 80 |
| 2 | A1.2 | 60 | 23 | 5 | 0 | 0 | 0 |
| 3 | B1 | 50 | 45 | 40 | 40 | 47 | 53 |
| 16 | C1 | 40 | 77 | 67 | 20 | 10 | 8 |
| Abkürzungen zu Tabelle 2: Siehe Abkürzungen zu Tabelle 1 | | | | | | | |

Beispiel 3 (Feldversuch)

In einer Gummibaum-Plantage wurden Parzellen mit dem tropischen Unkraut Axonopus compressus unter natürlichen Freilandbedingungen herangezogen (Parzellengröße 2 x 5m). Die Herbizide bzw. deren Mischungen im Tankmix wurden unter Standardbedingungen mit einem Parzellen-Spritzgerät bei einer Wasseraufwandmenge von 450 Liter Wasser je Hektar ausgebracht (Überkopfapplikation). Im Abstand von 4, 7, 13, 17 und 21 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte wie in Beispiel 1 beschrieben. Die Ergebnisse sind in Tabelle 3 zusammengefaßt.

Der Vergleich der Boniturwerte zeigt, daß die Dreiermischung (Versuch 1) erheblich bessere Langzeitwirkung hat als die Summe der herbiziden Wirkungen der Einzelherbizide (siehe die Versuche nach 13 bis 21 Wochen nach Applikation).

Tabelle 3:

| Herbizide Wirkung gegen Axonopus compressus in Gummibaum-Plantage | | | | | | | |
|---|---|---|---|---|---|---|---|
| Nr. | Wirkstoff(e) | Dosis (g AS/ha) | Wirkung (%), Wo. n. Appl. | | | | |
| | | | 4 | 7 | 13 | 17 | 21 |
| 1 | A1.2 + B1 + C1 | 60+50+40 | 70 | 80 | 80 | 80 | 70 |
| 2 | A1.2 | 60 | 17 | 10 | 0 | 0 | 0 |
| 3 | B1 | 50 | 35 | 35 | 45 | 45 | 50 |
| 16 | C1 | 40 | 5 | 5 | 0 | 0 | 0 |
| Abkürzungen zu Tabelle 3: Siehe Abkürzungen zu Tabelle 1 | | | | | | | |

Beispiel 4 (Feldversuch)

In einer Zuckerrohrplantage wurden Parzellen mit den Unkräutern Brachiaria mutica, Digitaria horizontalis, Panicum maximum, Echinochloa colona und Ageratum conyzoides unter natürlichen Freilandbedingungen herangezogen (Größe der Parzellen 2 x 5m). Die Herbizide bzw. deren Mischungen im Tankmix wurden unter Standardbedingungen ausgebracht (Überkopfapplikation mit Parzellen-Spritzgerät, Wasseraufwandmenge 450 l/ha). Vier Wochen nach Applikation wurde die herbizide Wirksamkeit der Wirkstoffe bzw. deren Mischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte wie in Beispiel 1 beschrieben. Die Ergebnisse sind in Tabelle 4 zusammengefaßt.

Der Vergleich der Boniturwerte zeigt, daß die Dreiermischung (Versuch 1) erheblich bessere mittlere Wirkung und Breitenwirkung hat als die Wirkung der Komponente A1.2 bei höherer Aufwandmenge.

Tabelle 4:

| Herbizide Wirkung gegen Unkräuter in Zuckerrohrplantage | | | | |
|---|---|---|---|---|
| Nr. | Wirkstoff(e) | Dosis (g AS/ha) | 1) Herbizide Wirkung (%) | 2) Unkrautbewuchs (%) |
| 1 | A1.2 + B1 + C1 | 100+100+80 | 92 | 4 |
| 2 | A1.2 | 300 | 72 | 27 |

Abkürzungen zu Tabelle 4:
1) Mittlere herbizide Wirkung in Prozent, vier Wochen nach Applikation; Mittelung über die fünf Unkräuter Brachiaria mutica, Digitaria horizontalis, Panicum maximum, Echinochloa colona und Ageratum conyzoides

2) Unkrautbewuchs in Prozent Bodenbedeckung; Kontrollparzelle hat mehr als 95% Unkrautbewuchs.

## Patentansprüche

1. Herbizide Mittel, **gekennzeichnet durch** einen wirksamen Gehalt an einer Kombination aus

A) einem oder mehreren blattwirksamen Herbiziden aus der Gruppe der Verbindungen der Formeln (A1) und (A2) und deren Ester und Salze,

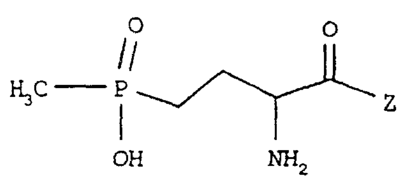

(A1)

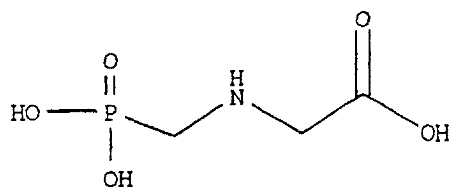

(A2)

worin Z einen Rest der Formel -OH oder einen Peptidrest der Formel

$$-NHCH(CH_3)CONHCH(CH_3)COOH$$

oder

$$-NHCH(CH_3)CONHCH[CH_2CH(CH_3)_2]COOH$$

bedeutet,

B) einem oder mehreren Wirkstoffen aus der Gruppe der Imidazolinon-Herbizide und deren Salze,

C) einem oder mehreren Wirkstoffen aus der Gruppe der Wuchsstoffherbizide und deren Ester und Salze.

2. Herbizide Mittel nach Anspruch 1, **dadurch gekennzeichnet, daß** sie als Herbizid (A) ein Herbizid aus der Gruppe D,L-Glufosinate, D,L-Glufosinateammonium, L-Glufosinate, L-Glufosinate-ammonium, Bialaphos und Bialaphosnatrium, Glyphosate, Glyphosate-natrium, Glyphosate-monoisopropylammonium, Sulfosate und Glyphosate-monoethylester und deren Mischungen enthalten.

3. Herbizide Mittel nach Anspruch 1 oder 2, **dadurch gekennzeichnet, daß** sie als Herbizid (B) ein Herbizid aus der Gruppe Imazapyr, Imazethapyr, Imazamethabenz, Imazamethabenz-methyl, Imazamox, Imazaquin, AC 263,222 und Salze und Ester der genannten Herbizide und Mischungen der genannten Herbizide enthalten.

**4.** Herbizide Mittel nach einem der Ansprüche 1 bis 3, **dadurch gekennzeichnet, daß** sie als Herbizid (C) ein Herbizid aus der Gruppe 2,4-D, MCPA, 2,3,6-TBA, Mecoprop, Mecoprop-P, Dichlorprop, Dichlorprop-P, 2,4-DB, MCPB und Dicamba und deren Salze, Ester und Mischungen der genannten Herbidzide enthalten.

**5.** Herbizide Mittel nach einem der Ansprüche 1 bis 4, **dadurch gekennzeichnet, daß** sie als Herbizide eine Kombination aus

(A) Glufosinate-ammonium, (B) Imazapyr und (C) 2,4-D-Natriumsalz enthalten.

**6.** Herbizide Mittel nach einem der Ansprüche 1 bis 5, **dadurch gekennzeichnet, daß** die Gewichtsverhältnisse A:B:C der kombinierten Herbizide A, B und C im Bereich von 1:0,5:0,5 bis 1:2:2 sind.

**7.** Herbizide Mittel nach einem der Ansprüche 1 bis 6, **dadurch gekennzeichnet, daß** sie 1-99 Gew.-% Herbizide und 99 bis 1 Gew.-% im Pflanzenschutz übliche Formulierungsmittel enthalten.

**8.** Verfahren zur Bekämpfung von unerwünschtem Pflanzenwuchs, **dadurch gekennzeichnet, daß** man ein oder mehrere Herbizide (A) mit einem oder mehreren Herbiziden (B) und einem oder mehreren Herbiziden (C) auf die Schadpflanzen, Pflanzenteile davon oder die Anbaufläche appliziert, wobei die Kombination der Herbzide (A), (B) und (C) wie in einem der Ansprüche 1 bis 6 definiert ist.

**9.** Verwendung einer Kombination aus Herbiziden (A), (B) und (C) als herbizides Mittel zur Bekämpfung von unerwünschtem Pflanzenwuchs, wobei die Kombination der Herbizide (A), (B) und (C) wie in einem der Ansprüche 1 bis 6 definiert ist.

## Claims

**1.** A herbicidal composition, which comprises an effective amount of a combination of

A) one or more leaf-acting herbicides from the group of the compounds of the formulae (A1) and (A2) and their esters and salts,

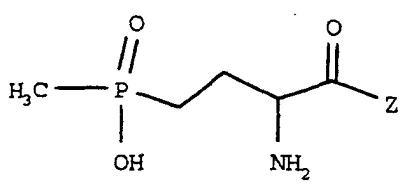

(A1)

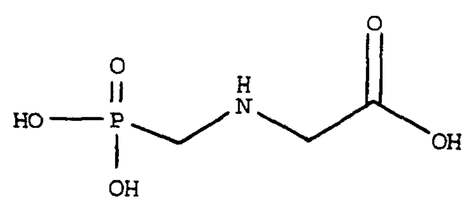

(A2)

in which Z is a radical of the formula -OH or a peptide radical of the formula

$$-NHCH(CH_3)CONHCH(CH_3)COOH$$

or

$$-NHCH(CH_3)CONHCH[CH_2CH(CH_3)_2]COOH,$$

B) one or more active compounds from the group of the imidazolinone herbicides and their salts,

C) one or more active compounds from the group of the growth-promoting herbicides and their esters and salts.

**2.** The herbicidal composition as claimed in claim 1, which comprises, as herbicide (A), a herbicide from the group D,L-glufosinate, D,L-glufosinate-ammonium, L-glufosinate, L-glufosinate-ammonium, bialaphos and bialaphos-sodium, glyphosate, glyphosate-sodium, glyphosate-monoisopropylammonium, sulfosate and glyphosate-monoethyl ester and their mixtures.

**3.** The herbicidal composition as claimed in claim 1 or 2, which comprises, as herbicide (B), a herbicide from the group imazapyr, imazethapyr, imazamethabenz, imazamethabenz-methyl, imazamox, imazaquin, AC 263,222 and salts and esters of the abovementioned herbicides and mixtures of the abovementioned herbicides.

**4.** The herbicidal composition as claimed in any of claims 1 to 3, which comprises, as herbicide (C), a herbicide from the group 2,4-D, MCPA, 2,3,6-TBA, mecoprop, mecoprop-P, dichlorprop, dichlorprop-P, 2,4-DB, MCPB and dicamba and their salts, esters and mixtures of the abovementioned herbicides.

**5.** The herbicidal composition as claimed in any of claims 1 to 4, which comprises, as herbicides, a combination of

(A) glufosinate-ammonium, (B) imazapyr and (C)2,4-D-sodium salt.

**6.** The herbicidal composition as claimed in any of claims 1 to 5, wherein the weight ratios A:B:C of the combined herbicides A, B and C are in the range from 1:0.5:0.5 to 1:2:2.

**7.** The herbicidal composition as claimed in any of claims 1 to 6, which comprises 1-99% by weight of herbicides and 99-1% by weight of formulation agents which are customary in crop protection.

**8.** A method for controlling undesirable vegetation, which comprises applying one or more herbicides (A) with one or more herbicides (B) and one or more herbicides (C) onto the harmful plants, plant parts thereof or the area under cultivation, where the combination of the herbicides (A), (B) and (C) is as defined in any of claims 1 to 6.

**9.** The use of a combination of herbicides (A), (B) and (C) as herbicidal composition for controlling undesirable vegetation, where the combination of the herbicides (A), (B) and (C) is as defined in any of claims 1 to 6.

## Revendications

**1.** Agents herbicides **caractérisés par** une teneur efficace d'une combinaison de

A) un ou plusieurs herbicides foliaires pris dans le groupe des composés de formules (A1) et (A2) et leurs esters et sels,

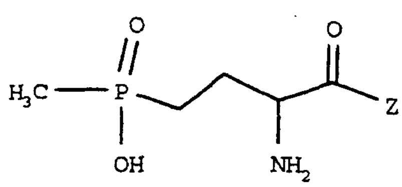

(A1)

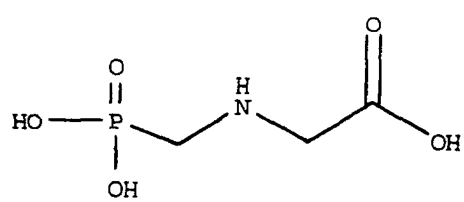

(A2)

où

Z représente un reste de formule -OH ou un reste d'un peptide de formule

$$-NHCH(CH_3)CONHCH(CH_3)COOH$$

ou

$$-NHCH(CH_3)CONHCH[CH_2CH(CH_3)_2]COOH,$$

B) une ou plusieurs substances actives prises dans le groupe comprenant des herbicides de la famille des imidazolinones et leurs sels,

C) une ou plusieurs substances actives prises dans le groupe comprenant des herbicides régulateurs de croissance et leurs sels et esters.

**2.** Agents herbicides selon la revendication 1 **caractérisés en ce qu'**ils comprennent en tant qu'herbicide (A) un herbicide du groupe des D,L-glufosinate, D,L-glufosinate d'ammonium, L-glufosinate, L-glufosinate d'ammonium, bialaphos et bialaphos de sodium, glyphosate, glyphosate de sodium, glyphosate de monoisopropylammonium, sulfosate et ester monoéthylique de glyphosate et leurs mélanges.

**3.** Agents herbicides selon la revendication 1 ou 2 **caractérisés en ce qu'**ils comprennent en tant qu'herbicide (B) un herbicide pris dans le groupe comprenant imazapyre, imazéthapyre, imazaméthabenz, imazaméthabenz-méthyl, imazamox, imazaquine, AC 263,222 et les sels et esters des herbicides cités et les mélanges des herbicides cités.

**4.** Agents herbicides selon l'une quelconque des revendications 1 à 3 **caractérisés en ce qu'**ils comprennent en tant qu'herbicide (C) un herbicide pris dans le groupe comprenant 2,4-D, MCPA, 2,3,6-TBA, mécoprop, mécoprop-P, dichloroprop, dichloroprop-P, 2,4-DB, MCPB et dicamba et leurs sels, esters et mélanges des herbicides cités.

**5.** Agents herbicides selon l'une quelconque des revendications 1 à 4 **caractérisés en ce qu'**ils comprennent en tant qu'herbicide une combinaison de

(A) glufosinate d'ammonium, (B) imazapyre et (C) sel de sodium de 2,4-D.

**6.** Agents herbicides selon l'une quelconque des revendications 1 à 5 **caractérisés en ce que** les rapports de poids A:B:C des herbicides combinés A, B et C sont dans la gamme de 1:0,5:0,5 à 1:2:2.

**7.** Agents herbicides selon l'une quelconque des revendications 1 à 6 **caractérisés en ce qu'**ils comprennent de 1 à 99 % en poids d'herbicides et de 99 à 1 % en poids d'agent de formulation usuels dans le phytosanitaire.

**8.** Procédé de lutte contre la croissance des plantes indésirables, **caractérisé en ce qu'**on applique un ou plusieurs herbicides (A) avec un ou plusieurs herbicides (B) et un ou plusieurs herbicides (C) sur les mauvaises herbes, les parties de plante de celles-ci ou le sol cultivable, la combinaison des herbicides (A), (B) et (C) étant définie selon l'une quelconque des revendications 1 à 6.

**9.** Utilisation d'une combinaison d'herbicides (A), (B) et (C) en tant qu'agent herbicide pour lutter contre la croissance des plantes indésirables, la combinaison des herbicides (A), (B) et (C) étant définie selon l'une quelconque des revendications 1 à 6.